# EUROPEAN PATENT APPLICATION

(11) **EP 1 550 911 A1**
(43) Date of publication of application: **06.07.2005**
(21) Application number: 03751450.2
(22) Date of filing: 10.10.2003
(51) Int. Cl.: G03B 21/62

(54) **SCREEN FOR REAR PROJECTION DISPLAY**

(30) Priority: 11.10.2002 JP 2002298751
(71) Applicant: Uchida, Tatsuo, Sendai-shi, Miyagi 983-0014 (JP); Tohoku Techno-Brains Corporation, Sendai-shi, Miyagi 980-0845 (JP)
(72) Inventor: Uchida, Tatsuo, Sendai-shi, Miyagi 983-0014 (JP); Katagiri, Baku, Aoba-ku, Sendai-shi, Miyagi 980-0866 (JP); Miyashita, Tetsuya, Taihaku-ku, Sendai-shi, Miyagi 982-0807 (JP); Ishinabe, Takahiro, Sendai-shi, Miyagi 980-0866 (JP)
(74) Representative: Henkel, Feiler & Hänzel
(86) International application number: PCT/JP2003/013050
(87) International publication number: WO 2004/034145

(57) **Abstract**

A rear projection display screen with a simplified structure that displays a high-quality image without the occurrence of stray light and moiré fringing is provided.

The rear projection display screen includes a scattering film 2 that uniformly scatters light incident from an angle in a specific angular range (from -α to -β) within a specific angular region (from β to α), and has a viewing angle of 40° or more in either the vertical direction or the horizontal direction or both the vertical direction and the horizontal direction.

The rear projection display screen of the present invention may include a protective plate 3 disposed on the scattering film, if necessary, the protective plate 3 protecting the scattering film.

## Description

### Technical Field

The present invention relates to rear projection display screens.

### Background Art

Rear projection displays employ a method to observe an image on the front side of a transmissive-type screen, the image being projected onto the rear surface of the screen by a projector. Generally, a known screen used in rear projection displays includes a Fresnel lens 10, which converts diffused light from a projector 1 into collimated light, a lenticular lens 20, which scatters the collimated light, and a protective plate 3, which protects these lenses. In this screen, angles of the scattered light are required to be 40° or over in the vertical direction and the horizontal direction (see, for example, paper: Arthur Davis, Robert C. Bush, John C. Harvey, and Michael F. Foley, "Fresnel Lenses in Rear Projection Displays", SID 01 DIGEST 934, p.95 and paper: Kazuyoshi Ebina "Optical System Architectures for Rear Projection Screen", invited paper, SID 02 DIGEST 1342, 51.3).

Unfortunately, the aforementioned screen of a known type suffers from a problem in that stray light tends to occur due to its complex structure and moiré fringing occurs due to the periodic structure of the lenses, resulting in degradation in image quality.

To this end, it is an object of the present invention to provide a rear projection display screen with a simplified structure which can display a high-quality image without the occurrence of stray light and moiré fringing.

### Disclosure of Invention

Through detailed investigation to achieve the aforementioned object, the present inventors found that use of a polymer membrane with a light-control function that allows light incident with angles in a specific angular range to pass through the membrane in a scattered manner and light incident on the membrane with angles in other specific angular ranges to pass straight through the membrane (see Document 1: Okita et al., Sumitomo Chemical, 1991-I, PP. 37-48) allows projected light to pass through the screen to be uniformly scattered in a direction towards an observer, and thus the present invention is accomplished.

More specifically, a rear projection display screen of the present invention includes a scattering film for scattering light within a specific angular range, the light being incident with an angle in a specific angle range, the rear projection display screen having a viewing angular of 40° or more in either the vertical direction or the horizontal direction or both the vertical direction and the horizontal direction. The rear projection display screen of the present invention may include a protective plate to protect the scattering film.

Although the scattering film may be composed of a single film, preferably, in order to widen the scattering angular range, the scattering film is a multilayered scattering film including a plurality of films having different scattering angular range from each other, the plurality of films being layered one on another.

### Brief Description of the Drawings

Fig. 1 is a schematic view of an example of a rear projection display screen of the present invention.
Fig. 2 is an explanatory diagram of the scattering characteristic of a scattering film.
Fig. 3 is a graph showing dependency of the scattering characteristic of the scattering film on incident angle.
Fig. 4 is a schematic diagram showing an example of angles of projected light incident on the screen according to the present invention.
Fig. 5 is a schematic diagram of an example of the rear projection display using the screen according to the present invention.
Fig. 6 is a schematic diagram of an example of a rear projection display screen of a known type.
Fig. 7 is a schematic diagram of an example of the rear projection display screen of the present invention.

### Reference Numerals

1 projector
2, 2A, 2B, 2c scattering films
3 protective plate
4, 4A, 4B plane mirrors
5 scattering film (multilayer)
6, 7 scattering ranges
10 Fresnel lens
20 lenticular lens
30 observer

### Best Mode for Carrying Out the Invention

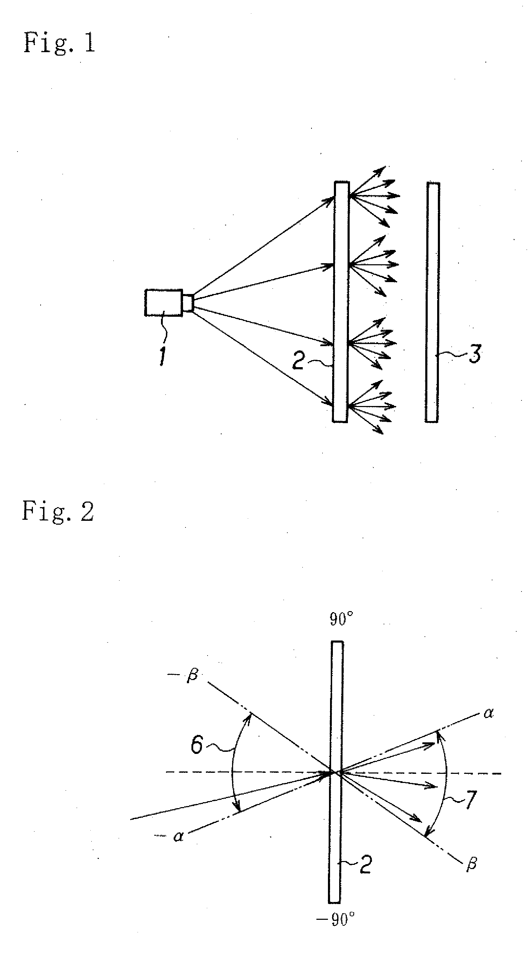

As shown in Fig. 2, a scattering film 2 used in the present invention has a scattering characteristic whereby incident light from a scattering range 6 (an angular range from -α to -β, where the normal to the surface of the scattering film is 0 degrees, angles above the normal are positive, and angles below the normal are negative) passes through the scattering film 2 to be scattered, preferably uniformly, in an opposite scattering range 7 (an angular range from β to α). The scattering film is composed of, for example, a special polymer membrane described in Document 1 (a visible-range control film composed of a composite of a polymer membrane and a transparent plastic material is referred to by the trade name LUMISTY in Document 1). The scattering film has an optical characteristic whereby the condition of light transmittance (scattering/straight transmission) is dramatically changed depending on the angle of light incident on the scattering film due to the unique periodic structure thereof. An appropriate thickness of the scattering film ranges from about 0.2 to 0.5 mm.

A scattering film having a scattering characteristic whereby a scattering range in the vertical direction or the horizontal direction extends over an angle of 40° or more (α - β ≥ 40°) is used as the rear projection display screen according to the present invention. Consequently, the screen has a viewing angle of 40° or more in either the vertical direction or the horizontal direction.

In order for the screen to have a viewing angle of 40° or more in both the vertical direction and the horizontal direction, the screen may be composed of a scattering film with a scattering range of α - β ≥ 40° that extends along the vertical direction and a scattering film with a scattering range of α - β ≥ 40° that extends along the horizontal direction, these scattering films being disposed one on another.

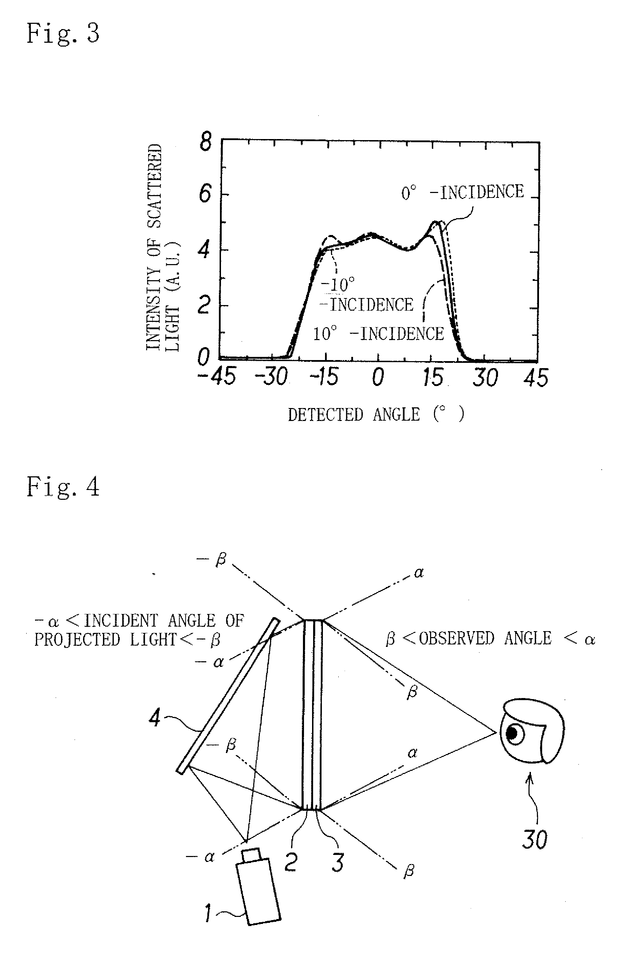

Fig. 3 is a graph showing the scattering characteristic of a scattering film having a scattering range of ±20° (from -20° to +20°). As shown in Fig. 3, scattering is substantially uniform in the scattering range, and light beams incident from the scattering range (-10°, 0°, 10°) exhibit substantially the same scattering characteristic.

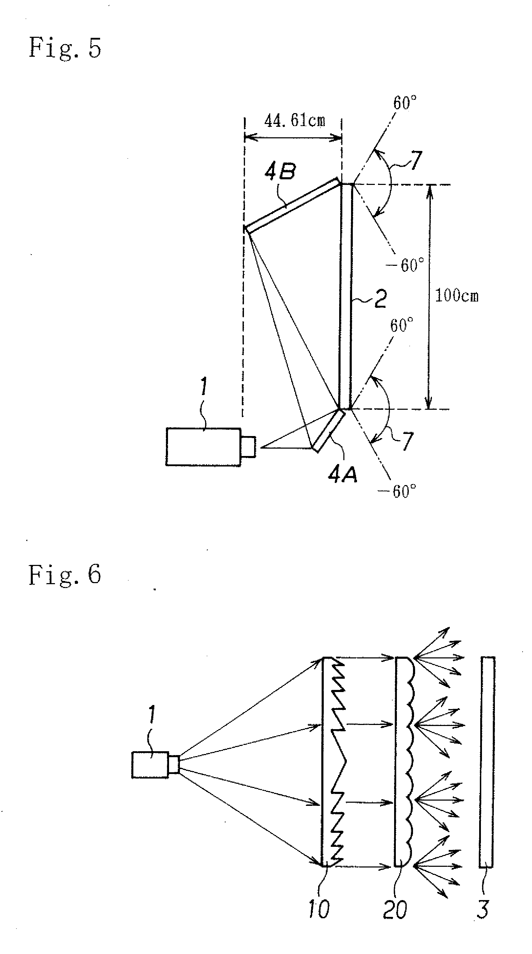

According to the present invention, as shown in Fig. 1, the above scattering film 2 is used as the rear projection display screen in place of the known Fresnel lens 10 and the lenticular lens 20 (see Fig. 6), thereby simplifying the structure of the screen. Consequently, the occurrence of stray light is suppressed and the occurrence of moiré fringing is eliminated, leading to reduced costs.

According to the present invention, a protective plate 3 to protect the scattering film 2 may be disposed on the scattering film 2, if necessary. The protective plate 3 is composed of, e.g., a transparent plastic film or glass and is bonded to the scattering film 2 with an appropriate adhesive.

The angle of projected light incident on the rear surface of the screen of the present invention is determined by an observed angle, as shown in Fig. 4. For example, in order to attain an observed angle in the range from β to α on the front surface of the screen, an optical system on the incident side has a structure such that the angle of projected light incident on the rear surface of the screen falls in the angular range from -α to -β. In Fig. 4, a plane mirror 4 is disposed between a projector 1 and the rear surface of the screen such that projected light is reflected by the plane mirror 4 to be incident on the rear surface of the screen at an incident angle in the range from -α to -β.

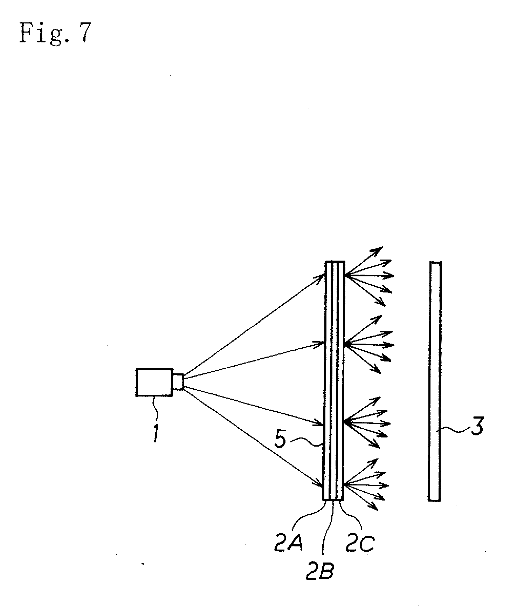

As shown in Fig. 7 for example, a multi-layered scattering film in which a number of films with different scattering-angle ranges are layered include a three-layered scattering film 5 having a film 2A with a scattering-angle range of 0° to 50° on the right side, a film 2B with a scattering-angle range of 0° to 50° on the left side, and a film 2C with a scattering-angle range of -25° to +25° in the vertical direction. In this case, a rear projection display has a viewing angle of ±50° in the horizontal direction and ±25° in the vertical direction.

### [Example]

Fig. 5 is a schematic view showing an example of the rear projection display using the screen according to the present invention. In this example, only the vertical direction is considered. A scattering film 2 has a scattering range of ±60° (from -60° to 60°), a longitudinal length of 100 cm, and a thickness of 0.3 mm, and light is projected onto the scattering film 2 with light-projecting angle of an angle of 24°. In this case, two plane mirrors 4a and 4b are used, and these mirrors are disposed on the rear surface of the screen in the positional relationship shown in Fig. 5, whereby a display with a thickness of about 45 cm is obtained.

### Industrial Applicability

According to the rear projection display screen of the present invention with a simple structure, the occurrence of stray light and moiré fringing is eliminated, and the quality of display image is thus improved.

## Claims

1. A rear projection display screen comprising a scattering film for scattering light within a specific angular range, the light being incident from an angle in a specific angle range, the rear projection display screen having a viewing angle of 40° or more in either the vertical direction or the horizontal direction or both the vertical direction and the horizontal direction.

2. The rear projection display screen according to Claim 1, further comprising a protective plate to protect the scattering film.

3. The rear projection display screen according to Claim 1 or Claim 2, wherein the scattering film is a multilayered scattering film including a plurality of films having different scattering angular range from each other, the plurality of films being layered one on another.
